# EUROPEAN PATENT APPLICATION

(11) **EP 4 261 978 A1**
(43) Date of publication of application: **18.10.2023**
(21) Application number: 22853496.2
(22) Date of filing: 04.08.2022
(51) Int. Cl.: H01M 10/0585, H01M 10/42, H01M 4/62, H01M 10/052

(54) **ELECTRODE STACK FOR LITHIUM SECONDARY BATTERY AND LITHIUM SECONDARY BATTERY COMPRISING SAME**

(30) Priority: 05.08.2021 KR 20210103164
(71) Applicant: LG Energy Solution, Ltd., Seoul 07335 (KR)
(72) Inventor: JIN, Xing, Daejeon 34122 (KR); CHOI, Eun Seok, Daejeon 34122 (KR); CHOI, Jin Woo, Daejeon 34122 (KR); BAEK, Ga Young, Daejeon 34122 (KR); KIM, Sang Deuk, Daejeon 34122 (KR); CHOI, Min Jun, Daejeon 34122 (KR); KIM, Byeong Uk, Daejeon 34122 (KR); JEON, Hae Song, Daejeon 34122 (KR)
(74) Representative: Hoffmann Eitle
(86) International application number: PCT/KR2022/011575
(87) International publication number: WO 2023/014121

(57) **Abstract**

The present invention relates to an electrode stack for a lithium secondary battery, in which one or more positive electrodes and one or more negative electrodes are alternatingly stacked with a separator therebetween, wherein an insulation layer having an average thickness of 1 um to 8 um is formed on the outermost positive electrode of the electrode stack, and the positive electrode includes a positive electrode collector; a positive electrode active material layer; and a protective layer including an inorganic compound which is disposed between the positive electrode collector and the positive electrode active material layer, and an electrode assembly and a lithium secondary battery which include the electrode stack.

## Description

### TECHNICAL FIELD

This application claims priority from Korean Patent Application No. 10-2021-0103164, filed on August 5, 2021, the disclosure of which is incorporated by reference herein.

The present invention relates to an electrode stack for a lithium secondary battery and a lithium secondary battery including the same.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

The lithium secondary battery is generally composed of a positive electrode including a positive electrode active material, a negative electrode including a negative electrode active material, a separator, and an electrolyte, and charge and discharge are performed by intercalation-deintercalation of lithium ions, wherein, after an electrode assembly is prepared by disposing the separator between the positive electrode and the negative electrode and is then inserted into a battery case, the lithium secondary battery is finally prepared by injecting the electrolyte.

In a case in which an external impact is applied to the secondary battery, for example, in a case in which a sharp object penetrates the secondary battery, the positive electrode and the negative electrode may be in contact with each other to cause a short circuit. Such a short circuit may cause a large amount of gas to be generated at a high speed in a short time and a high-temperature rise, and furthermore, a large explosion may occur, which may lead to a major accident.

Thus, there is a need to develop a new technique capable of solving such safety problems

### DISCLOSURE OF THE INVENTION

### TECHNICAL PROBLEM

An aspect of the present invention provides an electrode stack for a lithium secondary battery, in which safety is improved by reducing heat generation and preventing a short circuit between electrodes during an external impact, and a lithium secondary battery including the same.

### TECHNICAL SOLUTION

According to an aspect of the present invention,
there is provided an electrode stack for a lithium secondary battery in which one or more positive electrodes and one or more negative electrodes are alternatingly stacked with a separator therebetween,
wherein an insulation layer having an average thickness of 1 um to 8 um is formed on the outermost positive electrode of the electrode stack, and
the positive electrode includes a positive electrode collector; a positive electrode active material layer; and a protective layer including an inorganic compound which is disposed between the positive electrode collector and the positive electrode active material layer.

According to another aspect of the present invention, there is provided an electrode assembly for a lithium secondary battery which includes the electrode stack for a lithium secondary battery.

According to another aspect of the present invention, there is provided a lithium secondary battery including the electrode assembly for a lithium secondary battery.

### ADVANTAGEOUS EFFECTS

An electrode stack for a lithium secondary battery according to the present invention is characterized in that safety is improved, and, specifically, a major accident, such as an explosion, due to a short circuit between electrodes may be prevented and heat generated from the positive electrode during an external impact may be effectively released by forming a protective layer on an electrode collector and simultaneously including an insulation layer having a thickness in a specific numerical range on an outermost portion of the electrode stack.

### BRIEF DESCRIPTION OF THE DRAWINGS

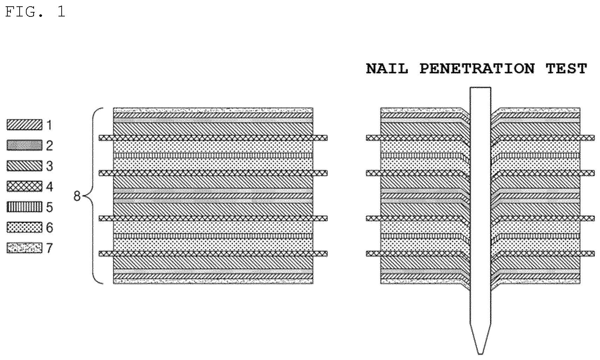

FIG. 1 is a schematic view of an electrode stack according to an embodiment of the present invention and a nail penetration test therefor.

### <Description of the Symbols>

- 1:: Positive Electrode Collector
- 2:: Protective Layer
- 3:: Positive Electrode Active Material Layer
- 4:: Separator
- 5:: Negative Electrode Collector
- 6:: Negative Electrode Active Material Layer
- 7:: Insulation Layer
- 8:: Electrode Stack

### MODE FOR CARRYING OUT THE INVENTION

Hereinafter, the present invention will be described in more detail to allow for a clearer understanding of the present invention.

In the present specification, when a part 'includes' a certain component, it means that other components may be further included rather than excluding other components unless otherwise stated.

In the present specification, when a member is described as being 'on' another member, this includes not only a case in which a member is in contact with another member but also a case in which another member is present between the two members.

In the present specification, the expression 'single-sided positive electrode' refers to a positive electrode in which a positive electrode active material layer is formed on only one side of both sides of a positive electrode collector, and the expression 'double-sided positive electrode' refers to a positive electrode in which a positive electrode active material layer is formed on both sides of a positive electrode collector.

In the present specification, the expression 'single-sided negative electrode' refers to a negative electrode in which a negative electrode active material layer is formed on only one side of both sides of a negative electrode collector, and the expression 'double-sided negative electrode' refers to a negative electrode in which a negative electrode active material layer is formed on both sides of a negative electrode collector.

As lithium secondary batteries are exposed to various operating environments while utilization of the lithium secondary batteries increases, securing safety has become a very important task to solve. For example, in a case in which a short circuit between a positive electrode and a negative electrode occurs due to an external impact, since a temperature is rapidly increased, an explosion accident may occur due to rapid gas generation and heat generation. Thus, a nail penetration test is performed in a preparation process in order to prevent this in advance, wherein an electrode stack according to the present invention is characterized in that safety against the nail penetration test is enhanced.

Specifically, the electrode stack for a lithium secondary battery of the present invention provided to solve the above-described tasks is an electrode stack in which one or more positive electrodes and one or more negative electrodes are alternatingly stacked with a separator therebetween, wherein an insulation layer having an average thickness of 1 um to 8 um is formed on the outermost positive electrode of the electrode stack, and the positive electrode includes a positive electrode collector; a positive electrode active material layer; and a protective layer disposed between the positive electrode collector and the positive electrode active material layer.

Hereinafter, each configuration of the present invention will be described in more detail.

### <Structure of Electrode Assembly>

In an embodiment of the present invention, the electrode stack may include two or more of the positive electrodes. Specifically, a single-sided positive electrode having a positive electrode active material layer formed on one side of a positive electrode collector is disposed on outermost both sides of the electrode stack, and the insulation layer may be formed on an opposite side to the side of the positive electrode collector on which the positive electrode active material layer has been formed.

In an embodiment of the present invention, the electrode stack may have a structure in which, between the single-sided positive electrodes disposed on the outermost both sides, a double-sided negative electrode having a negative electrode active material layer formed on both sides of a negative electrode collector; a double-sided positive electrode having a positive electrode active material layer formed on both sides of a positive electrode collector; and a double-sided negative electrode having a negative electrode active material layer formed on both sides of a negative electrode collector are alternatingly stacked with a separator disposed therebetween.

Referring to a left figure of FIG. 1 illustrating an example of the electrode stack according to the present invention, an electrode stack 8 of the present invention has a structure in which a positive electrode including a positive electrode collector 1, a protective layer 2 , and a positive electrode active material layer 3; and a negative electrode including a negative electrode collector 5 and a negative electrode active material layer 6 are alternatingly stacked with a separator 4 disposed therebetween. Specifically, the single-sided positive electrode disposed on the outermost both sides of the electrode stack 8 has a structure in which the positive electrode active material layer 3, the protective layer 2, the positive electrode collector 1, and an insulation layer 7 are sequentially stacked in a direction from the inside to the outside, and, between the two single-sided positive electrodes disposed on the outermost both sides, a double-sided negative electrode having the negative electrode active material layer 6 formed on both sides of the negative electrode collector 5; a double-sided positive electrode having the positive electrode active material layer 3 formed on both sides of the positive electrode collector 1; and a double-sided negative electrode are alternatingly stacked with a separator disposed therebetween. However, this is only a representative example, and a configuration of the electrode and the separator, which are stacked between the single-sided positive electrodes disposed on the outermost both sides, may be changed if necessary.

A nail penetration test is performed on the electrode stack 8 as shown in a right figure of FIG. 1.

If a nail penetration test is performed on a general electrode stack without the protective layer according to the related art, since a positive electrode collector and a negative electrode active material layer are in contact with each other while a nail penetration portion is cut, it is highly likely to lead to a fire accident, such as an explosion, while the temperature is rapidly increased due to a short-circuit current.

Thus, in the present invention, possibility of direct contact of the positive electrode collector 1 with the negative electrode active material layer 6 was greatly reduced even if the structure of the electrode stack was damaged due to nail penetration by introducing the protective layer 2 between the positive electrode collector 1 and the positive electrode active material layer 3, and risk of an accident was reduced by decreasing short-circuit resistance.

In addition, in a case in which the outermost positive electrode collector 1 is in direct contact with a nail, since a strong short-circuit current flows to the nail, there is a risk of a rapid increase in ignition rate, but, in a case in which the insulation layer 7 is included on the outermost positive electrode collector as in the electrode stack 8 of the present invention, since resistance at a cross section where the nail and the outermost portion are in contact with each other is significantly increased, it was confirmed that the ignition rate may be reduced.

### <Positive Electrode>

In an embodiment of the present invention, the positive electrode may be prepared by forming a protective layer by coating a composition for forming a protective layer, which includes an inorganic compound, on a positive electrode collector, and coating a positive electrode slurry including a positive electrode active material on the protective layer to form a positive electrode active material layer.

In an embodiment of the present invention, the positive electrode collector is not particularly limited so long as it has conductivity without causing adverse chemical changes in the battery, and, for example, aluminum; stainless steel; nickel; titanium; fired carbon; or aluminum or stainless steel that is surface-treated with one of carbon, nickel, titanium, silver, or the like may be used.

In an embodiment of the present invention, with respect to the single-sided positive electrode, the protective layer is formed on one side of the positive electrode collector, and, with respect to the double-sided positive electrode, the protective layer is formed on both sides of the positive electrode collector.

In an embodiment of the present invention, the inorganic compound included in the protective layer may be at least one selected from a metal oxide, a non-metal oxide, a metal carbide, and a non-metal carbide.

In an embodiment of the present invention, the inorganic compound may be a lithium iron phosphate-based oxide, as a metal oxide, and, in this case, since it has higher thermal stability than other inorganic compounds and includes a lithium source, it is preferable in terms of capacity achievement and safety.

In an embodiment of the present invention, the lithium iron phosphate-based oxide may be represented by the following Formula 1, and is preferably LiFePO₄.

[Formula 1] LiFe₁₋ₐMₐPO₄

In Formula 1,
M is at least one selected from nickel (Ni), cobalt (Co), manganese (Mn), aluminum (Al), magnesium (Mg), yttrium (Y), zinc (Zn), indium (In), ruthenium (Ru), tin (Sn), antimony (Sb), titanium (Ti), tellurium (Te), niobium (Nb), molybdenum (Mo), chromium (Cr), zirconium (Zr), tungsten (W), iridium (Ir), and vanadium (V), and
0≤a<1.

In an embodiment of the present invention, the protective layer may further include a binder, a conductive agent, and a dispersant.

In an embodiment of the present invention, the binder may be polyvinylidene fluoride, polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene termonomer, a styrene-butadiene rubber, a fluoro rubber, or various copolymers thereof.

In an embodiment of the present invention, as the conductive agent, a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers and potassium titanate whiskers; conductive metal oxide such as titanium oxide; or polyphenylene derivatives, may be used.

In an embodiment of the present invention, the dispersant may be a hydrogenated nitrile butadiene rubber (HNBR) .

In an embodiment of the present invention, the protective layer may be formed by a method of coating the composition for forming a protective layer, in which the inorganic compound, the binder, the conductive agent, and the dispersant are put in an organic solvent, such as NMP (N-methyl-2-pyrrolidone), and mixed, on the positive electrode collector.

In an embodiment of the present invention, an amount of the inorganic compound may be in a range of 85 wt% to 96 wt%, preferably, 90 wt% to 96 wt% based on a total weight of the protective layer.

In an embodiment of the present invention, the positive electrode active material layer includes a positive electrode active material, and is formed on the protective layer. The positive electrode active material layer may be prepared by coating a positive electrode slurry including the positive electrode active material to be described later, the binder, the conductive agent, and a solvent on the positive electrode collector having the protective layer formed thereon, and then drying and rolling the coated positive electrode collector. With respect to the single-sided positive electrode, the positive electrode active material layer is formed on one side of the positive electrode collector having the protective layer formed thereon, and, with respect to the double-sided positive electrode, the positive electrode active material layer is formed on each of the protective layers formed on both sides of the positive electrode collector.

In an embodiment of the present invention, a lithium transition metal oxide may be used as the positive electrode active material. The lithium transition metal oxide may be used without limitation as long as intercalation or deintercalation of lithium ions occurs easily during charge and discharge, but, for example, may be at least one selected from LiNi_{1-x-y-z}CoₓM¹_{y}M²zO₂ (where M¹ and M² are each independently any one selected from the group consisting of Al, Ni, Co, iron (Fe), Mn, V, Cr, Ti, W, tantalum (Ta), Mg and Mo, and x, y, and z are each independently atomic fractions of oxide composition elements, wherein 0≤<0.5, 0≤y<0.5, 0≤z<0.5, and x+y+z=1) including LCO (LiCoO₂), LNO (LiNiO₂), LMO (LiMnO₂), LiMn₂O₄, LiCoPO₄, LFP (LiFePO₄), LiNiMnCoO₂, and NMC (LiNiCoMnO₂).

The positive electrode active material may specifically include a lithium metal oxide including lithium and at least one metal such as cobalt, manganese, nickel, or aluminum.

More specifically, the lithium metal oxide may be at least one selected from lithium-manganese-based oxide such as LiMnO₂ and LiMn₂O₄; lithium-cobalt-based oxide such as LiCoO₂; lithium-nickel-based oxide such as LiNiO₂; lithium-nickel-manganese-based oxide such as LiNi_{1-Y}Mn_{Y}O₂ (where 0<Y<1) and LiMn_{2-z}Ni_{z}O₄ (where 0<Z<2); lithium-nickel-cobalt-based oxide such as LiNi_{1-Y1}Co_{Y1}O₂ (where 0<Y1<1); lithium-manganese-cobalt-based oxide such as LiCo_{1-Y2}Mn_{Y2}O₂ (where 0<Y2<1) and LiMn_{2-Z1}Co_{z1}O₄ (where 0<21<2); lithium-nickel-manganese-cobalt-based oxide such as Li (NiₚCo_{q}Mnᵣ₁ O₂ (where 0<p<1, 0<q<1, 0<r1<1, and p+q+r1=1) and Li(Niₚ₁Co_{q1}Mnᵣ₂)O₄ (where 0<p1<2, 0<q1<2, 0<r2<2, and p1+q1+r2=2); and lithium-nickel-cobalt-transition metal (M) oxide such as Li(Niₚ₂Co_{q2}Mnᵣ₃Mₛ₂)O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<S2<1, and p2+q2+r3+S2=1).

The solvent of the positive electrode slurry may be an organic solvent, such as N-methyl-2-pyrrolidone (NMP), and may be used in an amount such that desirable viscosity is obtained when the positive electrode active material as well as optionally the binder and the conductive agent are included. For example, the solvent may be included in an amount such that a concentration of solid content in the positive electrode slurry is in a range of 10 wt% to 90 wt%, preferably, 40 wt% to 85 wt%.

The binder in the positive electrode slurry is a component that assists in binding between the conductive agent and the positive electrode material and in binding with the current collector, wherein the binder is commonly added in an amount of 1 wt% to 30 wt% based on a total weight of the solid content in the positive electrode slurry. Examples of the binder may be polyvinylidene fluoride, polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene termonomer, a styrene-butadiene rubber, a fluoro rubber, or various copolymers thereof.

The conductive agent in the positive electrode slurry is a component providing conductivity without causing adverse chemical changes in the battery, wherein the conductive agent may be added in an amount of 0.5 wt% to 20 wt% based on the total weight of the solid content in the positive electrode slurry.

As the conductive agent, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The positive electrode active material may be included in an amount of 80 wt% to 99 wt%, specifically, 90 wt% to 99 wt% based on the total weight of the solid content in the positive electrode slurry. In this case, since energy density is decreased when the amount of the positive electrode active material is 80 wt% or less, capacity may be reduced.

In an embodiment of the present invention, a protective layer and a positive electrode active material layer are sequentially formed on an inner side of the positive electrode collector of the single-sided positive electrode disposed on the outermost both sides, and an insulation layer having an average thickness of 1 µm to 8 µm is formed on an outer side. That is, the insulation layer may be formed by coating a composition for forming an insulation layer on the side opposite to the side, on which the protective layer has been formed, of the positive electrode collector. The insulation layer may have a thickness of 1 um to 8 um, preferably, 3 um to 7 um. When the thickness of the insulation layer is 1 um or more, exposure of positive electrode collector metal may be prevented, and, when the thickness of the insulation layer is 8 um or less, cracking of the insulation layer during the nail penetration test may be prevented. Specifically, the insulation layer coating may be performed by a gravure process, wherein a coating thickness may be controlled by an application amount of the composition, viscosity of the composition, a mesh design of a roll, or a rotational speed of the roll. In a case in which the insulation layer is formed to a thin thickness of less than 1 um, since the viscosity of the composition is reduced so that non-uniform coating is formed due to a dripping phenomenon, the exposure of the positive electrode collector metal may occur. In contrast, in a case in which an excessively thick insulation layer is formed to a thickness of greater than 8 µm, since the insulation layer may not be properly maintained while cracks occur during a drying process, the exposure of the positive electrode collector metal may occur similarly.

In an embodiment of the present invention, the insulation layer may include a cellulose-based compound, and the cellulose-based compound may be carboxymethyl cellulose (CMC), carboxyethyl cellulose, hydroxymethyl cellulose, hydroxyethyl cellulose, hydroxypropyl cellulose, or a mixture thereof and may preferably be carboxymethyl cellulose. The cellulose-based compound may function as a dispersant of the composition for forming an insulation layer.

In an embodiment of the present invention, the insulation layer may include the cellulose-based compound in an amount of 0.1 wt% to 1 wt% based on a total weight of the insulation layer.

In an embodiment of the present invention, the insulation layer may further include a ceramic.

In an embodiment of the present invention, the ceramic may be at least one selected from Al₂O₃, BaTiO₃, CaO, CeO₂, NiO, MgO, SiO₂, SnO₂, SrTiO₃, TiO₂, Y₂O₃, ZnO, ZrO₂, Pb(Zrₓ, Ti₁₋ₓ)O₃ (PZT, 0<x<1), Pb₁₋ₓLaₓZr_{1-y}Ti_{y}O₃ (PLZT, 0<x<1, 0<y<1), (1-x)Pb(Mg_{1/3}Nb_{2/3})O₃₋ₓPbTiO₃ (PMN-PT, 0<x<1), and hafnia (HfO₂), and may preferably be Al₂O₃.

In an embodiment of the present invention, an amount of the ceramic may be in a range of 10 wt% to 49.9 wt%, preferably 15 wt% to 40 wt%, and more preferably 20 wt% to 30 wt% based on the total weight of the insulation layer.

In an embodiment of the present invention, the insulation layer is formed for the purpose of preventing a direct contact between the nail and the outermost single-sided positive electrode during the nail penetration test, may further include at least one polymer selected from polybutadiene, polyurethane, polyimide, polyvinyl acetate, polyester, polyphenylene sulfide, polypropylene, a styrene-butadiene-based copolymer, a (meth)acrylate copolymer, polyacrylonitrile, polyvinyl chloride, polyfluoro, polyvinyl alcohol, and polycyanoacrylate, as an adhesive, in order for the positive electrode collector not to be exposed even during penetration, and may preferably include a styrene-butadiene-based copolymer. Since the styrene-butadiene-based copolymer has excellent thermal stability, there is an advantage in that performance may be maintained even if the temperature is increased during nail penetration.

In an embodiment of the present invention, an amount of the polymer may be in a range of 50 wt% to 90 wt%, preferably 50 wt% to 85 wt%, and more preferably 70 wt% to 80 wt% based on the total weight of the insulation layer. When the amount of the polymer is 50 wt% or more, sufficient adhesion may be secured, and, when the amount of the polymer is 90 wt% or less, since the amount of the ceramic may be sufficiently secured, a problem that the positive electrode collector is exposed due to shrinkage of the polymer by heat may be prevented.

In an embodiment of the present invention, the insulation layer may be formed by coating the composition for forming an insulation layer, in which the cellulose-based compound, the ceramic, and the polymer are added to at least one solvent selected from water, glycerol, ethylene glycol, propylene glycol, dimethyl sulfoxide, dimethyl formamide, acetonitrile, ethylene carbonate, furfuryl alcohol, and methanol and mixed, on the positive electrode collector.

### <Negative Electrode and Separator>

The electrode stack according to the embodiment of the present invention includes a separator between the above-described positive electrode and negative electrode as one of unit cells constituting an electrode assembly. Any negative electrode and separator may be used in the present invention without particular limitation as long as they are commonly used in a lithium secondary battery.

In an embodiment of the present invention, the negative electrode may be prepared by coating a negative electrode slurry including a negative electrode active material, a binder, a conductive agent, and a solvent on a negative electrode collector, and then drying and rolling to form a negative electrode active material layer.

The negative electrode active material layer includes a negative electrode active material, and the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), Ni, sodium (Na), potassium (K), rubidium (Rb), cesium (Cs), francium (Fr), beryllium (Be), Mg, calcium (Ca), strontium (Sr), silicon (Si), Sb, lead (Pb), In, Zn, barium (Ba), radium (Ra), germanium (Ge), Al, and Sn or an alloy of lithium and the metal may be used.

One selected from the group consisting of PbO, PbO₂, Pb₂O₃, Pb₃O₄, Sb₂O₃, Sb₃O₄, Sb₂O₃, GeO, GeO₂, Bi₂O₃, Bi₂O₄, Bi₂O₃, LiₓFe₂O₃ (0≤x≤1), LiₓWO₂(0≤x≤1), and SnₓMe₁₋ₓMe'_{y}O_{z} (Me: Mn, Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x<2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. Specifically, the element Y may be selected from the group consisting of Mg, Ca, Sr, Ba, Ra, scandium (Sc), Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, Ru, osmium (Os), hassium (Hs), rhodium (Rh), Ir, palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), sulfur (S), selenium (Se), Te, polonium (Po), and a combination thereof.

The transition metal oxide may include lithium-containing titanium composite oxide (LTO), vanadium oxide, and lithium vanadium oxide.

The negative electrode collector generally has a thickness of 3 um to 500 um. The negative electrode collector is not particularly limited so long as it has high conductivity without causing adverse chemical changes in the battery, and, for example, copper; stainless steel; aluminum; nickel; titanium; fired carbon; copper or stainless steel that is surface-treated with one of carbon, nickel, titanium, silver, or the like; or an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The solvent of the negative electrode slurry may include water; or an organic solvent, such as NMP (N-methyl-2-pyrrolidone) and alcohol, and may be used in an amount such that desirable viscosity is obtained when the negative electrode active material as well as optionally the binder and the conductive agent are included. For example, the solvent may be included in an amount such that a concentration of solid content including the negative electrode active material as well as optionally the binder and the conductive agent is in a range of 50 wt% to 95 wt%, preferably, 70 wt% to 90 wt%.

The negative electrode active material may be included in an amount of 60 wt% to 99 wt%, preferably 70 wt% to 99 wt%, and more preferably 80 wt% to 98 wt% based on a total weight of the solid content excluding the solvent in the negative electrode slurry.

The binder in the negative electrode slurry is a component that assists in the binding between the conductive agent, the active material, and the current collector. Examples of the binder may be polyvinylidene fluoride (PVDF), polyvinyl alcohol, carboxymethylcellulose, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, and various copolymers thereof.

The binder may be included in an amount of 1 wt% to 20 wt%, preferably 1 wt% to 15 wt%, and more preferably 1 wt% to 10 wt% based on the total weight of the solid content excluding the solvent in the negative electrode slurry.

The conductive agent in the negative electrode slurry is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; and polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode slurry.

The separator separates the negative electrode and the positive electrode and provides a movement path of lithium ions, wherein a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a separator including or coated with a ceramic component or a polymer material in the form of a film, a fiber, or powder may be used to secure heat resistance or mechanical strength, and the separator having a single layer or multilayer structure may be used.

### <Lithium Secondary Battery>

An electrode assembly for a lithium secondary battery according to the present invention includes the above-described electrode stack. The electrode assembly may include a plurality of electrode stacks as unit cells, and may be in the form of a jelly-roll type prepared by winding one or more unit cells, a stacked type prepared by sequentially stacking unit cells, or a stack and folding type prepared by folding after placing unit cells side by side on a folding separator.

A lithium secondary battery according to the present invention includes the above-described electrode assembly. Specifically, the lithium secondary battery includes the electrode assembly, a battery case accommodating the electrode assembly, an electrolyte injected after accommodation in the battery case, and a sealing member sealing the battery case.

The battery case is classified into a pouch type and a can type according to its material, wherein the pouch type refers to a pouch formed of a flexible polymer material, and the can type refers to a case formed of a material such as metal or plastic. A lithium secondary battery may be prepared by injecting an electrolyte, after inserting the electrode assembly into the battery case, and sealing the battery case.

As the electrolyte used in the present invention, an organic liquid electrolyte, an inorganic liquid electrolyte, a solid polymer electrolyte, a gel-type polymer electrolyte, a solid inorganic electrolyte, or a molten-type inorganic electrolyte, which may be used in the preparation of the lithium secondary battery, may be used without limitation, but the organic liquid electrolyte is typically described in the present specification.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethylcarbonate (DMC), diethylcarbonate (DEC), methylethylcarbonate (MEC), ethylmethylcarbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethylcarbonate, dimethylcarbonate, or diethylcarbonate) is more preferable. In this case, it is desirable that the cyclic carbonate and the chain carbonate are mixed in a volume ratio of about 1:1 to about 1:9 and used.

Any lithium salt typically used in an electrolyte for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include one selected from the group consisting of LiN(FSO₂)₂ (lithium bis(fluorosulfonyl)imide, LiFSI), LiPF₆, LiClO₄, LiBF₄, LiTFSI, lithium bis(pentafluoroethanesulfonyl)imide (LiBETI), LiSO₃CF₃, LiPO₂F₂, lithium bis(oxalate)borate (LiBOB), lithium difluoro(oxalate)borate (LiFOB), lithium difluoro(bisoxalato)phosphate (LiDFBP), lithium tetrafluoro(oxalate)phosphate (LiTFOP), and lithium fluoromalonato(difluoro)borate (LiFMDFB), or a mixture of two or more thereof.

The electrolyte may optionally include additives, if necessary, in addition to the above electrolyte components in order to prevent occurrence of collapse of the electrode due to decomposition of the electrolyte in a high voltage environment or to further improve low-temperature high rate discharge characteristics, high-temperature stability, overcharge prevention, and an effect of suppressing battery swelling at high temperature.

The additive may be at least one selected from a cyclic carbonate-based compound, a halogen-substituted carbonate-based compound, a sultone-based compound, a sulfate-based compound, a phosphate-based compound, a borate-based compound, a nitrile-based compound, an amine-based compound, a silane-based compound, a benzene-based compound, and a lithium salt-based compound. An amount of the additive may be in a range of 0.01 wt% to 5 wt% based on a total weight of the electrolyte.

The lithium secondary battery according to the present invention may be used in portable devices, such as mobile phones, notebook computers, and digital cameras, and electric cars.

According to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, the present invention will be described in detail, according to specific examples.

### [Example and Comparative Examples: Preparation of Electrode Stack]

### <Example 1>

A composition for forming a protective layer was prepared by mixing 90.5 wt% of LiFePO₄, 4 wt% of acetylene black, 4 wt% of polyvinylidenefluoride (PVDF), and 1.5 wt% of a hydrogenated nitrile butadiene rubber (HNBR) in an N-methylpyrrolidone (NMP) solvent so that a solid content was 60 wt%.

Separately, 96.8 wt% of LiCoO₂, 1.5 wt% of carbon black as a conductive agent, 1.5 wt% of PVdF as a binder, and 0.2 wt% of a hydrogenated nitrile butadiene rubber (HNBR) were mixed in an N-methylpyrrolidone (NMP) solvent to prepare a positive electrode active material slurry having a solid content of 75 wt%.

After coating the above-prepared composition for forming a protective layer on an Al foil current collector, drying was performed to form a protective layer having a thickness of 10 um. Subsequently, the positive electrode active material slurry was coated on the protective layer, dried, and then roll-pressed to prepare a single-sided positive electrode in which the protective layer and a positive electrode active material layer were sequentially formed on the positive electrode collector. A double-sided positive electrode was prepared in the same manner as the single-sided positive electrode except that the protective layer and the positive electrode active material layer were formed on both sides of the positive electrode collector.

Graphite as a negative electrode active material, a styrene-butadiene rubber (SBR) as a binder, carbon black as a conductive agent, CMC as a dispersant, and distilled water, as a solvent, were mixed in a weight ratio of 76.4:1.95:0.5:1.15:20 to prepare a negative electrode slurry. The negative electrode slurry was coated on both sides of a 20 um thick Cu current collector, dried, and then roll-pressed to prepare a double-sided negative electrode.

An electrode stack having a bi-cell structure was prepared by stacking the above-prepared single-sided positive electrode, double-sided negative electrode, double-sided positive electrode, double-sided negative electrode, and single-sided positive electrode alternatingly with a polyethylene separator. Then, 1 mg per cm² of a composition for forming an insulation layer was coated on the protective layer formed on the outermost positive electrode by a gravure coating method and then dried to form an insulation layer having an average thickness of 5 um to prepare a lithium secondary battery having a structure as shown in FIG. 1.

As the composition for forming an insulation layer, one, in which 20 wt% of alumina (Al₂O₃), 79.9 wt% of a styrene-butadiene rubber (SBR), and 0.1 wt% of carboxymethyl cellulose (CMC) were dissolved in water and mixed to have a solid content of 40 wt%, was used.

### <Comparative Example 1>

A lithium secondary battery was prepared in the same manner as in Example 1 except that the insulation layer was not formed in Example 1.

### <Comparative Example 2>

A lithium secondary battery was prepared in the same manner as in Example 1 except that a positive electrode having no protective layer was used in Example 1.

### <Comparative Example 3>

A lithium secondary battery was prepared in the same manner as in Example 1 except that 0.5 mg per cm² of the composition for forming an insulation layer was coated on the protective layer formed on the outermost positive electrode and then dried to form an insulation layer having an average thickness of 0.5 um in Example 1.

### <Comparative Example 4>

A lithium secondary battery was prepared in the same manner as in Example 1 except that 1.8 mg per cm² of the composition for forming an insulation layer was coated on the protective layer formed on the outermost positive electrode and then dried to form an insulation layer having an average thickness of 9 um in Example 1.

### [Experimental Example: Nail Penetration Test]

After each of the electrode stacks prepared in Example 1 and Comparative Examples 1 to 4 was placed inside a pouch-type battery case, an electrolyte solution was injected into the case to prepare a lithium secondary battery. In this case, the electrolyte solution was prepared by dissolving 1.0 M LiPF₆ in an organic solvent in which ethylene carbonate (EC) :ethylmethylcarbonate (EMC) were mixed in a volume ratio of 30:70.

After the lithium secondary battery prepared as described above was fully charged to a state of charge (SOC) of 100% at 0.5 C to 4.47 V (0.05 C cut off) under a constant current/constant voltage (CC/CV) condition at 25°C and aged by being stored at room temperature for 24 hours, a nail penetration test was performed using a nail penetration tester.

Specifically, each of the lithium secondary batteries prepared in Example 1 and Comparative Examples 1 to 4 was placed on a flat plate and a center of the cell was penetrated by a stainless steel nail with a diameter of 3±0.2 mm at an angle of 32° and a penetration speed of 50 mm/sec to measure whether or not ignition occurred. The same test was performed on 10 of each of the batteries prepared in Example 1 and Comparative Examples 1 to 4 to measure an ignition rate, and the results thereof are listed in Table 1 below.

**[Table 1]**

| | Example 1 | Comparative Example 1 | Comparative Example 2 | Comparative Example 3 | Comparative Example 4 |
|---|---|---|---|---|---|
| The number of ignited batteries / total number of batteries (ignition rate, %) | 0/10 (0%) | 3/10 (30%) | 10/10 (100%) | 3/10 (30%) | 2/10 (20%) |

From the results of the above table, the lithium secondary battery of Example 1 including both the insulation layer and the protective layer did not ignite at all in the nail penetration test, but, with respect to the lithium secondary battery (Comparative Example 1) not including the insulation layer or the lithium secondary battery (Comparative Example 2) not including the protective layer, it may be confirmed that ignition occurred. In addition, with respect to Comparative Example 3 including the insulation layer having a thickness of less than 1 um, since the insulation layer was not uniformly formed and the Al foil was exposed while a dripping phenomenon occurred due to low viscosity during an insulation layer coating process, it exhibited the same ignition rate as Comparative Example 1 without including the insulation layer, and, with respect to Comparative Example 4 in which the excessively thick insulation layer was formed to a thickness of greater than 8 µm, since the Al foil was exposed while cracks occurred in the insulation layer during a drying process, it may be confirmed that ignition occurred.

## Claims

1. An electrode stack for a lithium secondary battery in which one or more positive electrodes and one or more negative electrodes are alternatingly stacked with a separator therebetween,
wherein an insulation layer having an average thickness of 1 um to 8 um is formed on the outermost positive electrode of the electrode stack, and
the positive electrode comprises a positive electrode collector; a positive electrode active material layer; and a protective layer including an inorganic compound which is disposed between the positive electrode collector and the positive electrode active material layer.

2. The electrode stack for a lithium secondary battery of claim 1, wherein two or more of the positive electrodes are included.

3. The electrode stack for a lithium secondary battery of claim 2, wherein a single-sided positive electrode having a positive electrode active material layer formed on one side of a positive electrode collector is disposed on outermost both sides of the electrode stack, and
the insulation layer is formed on an opposite side to the side of the positive electrode collector on which the positive electrode active material layer has been formed.

4. The electrode stack for a lithium secondary battery of claim 3, wherein, between the single-sided positive electrodes disposed on the outermost both sides,
a double-sided negative electrode having a negative electrode active material layer formed on both sides of a negative electrode collector;
a double-sided positive electrode having a positive electrode active material layer formed on both sides of a positive electrode collector; and
a double-sided negative electrode having a negative electrode active material layer formed on both sides of a negative electrode collector are alternatingly stacked with a separator disposed therebetween.

5. The electrode stack for a lithium secondary battery of claim 1, wherein the insulation layer comprises a cellulose-based compound.

6. The electrode stack for a lithium secondary battery of claim 1, wherein the insulation layer further comprises a ceramic.

7. The electrode stack for a lithium secondary battery of claim 6, wherein the ceramic is at least one selected from Al₂O₃, BaTiO₃, CaO, CeO₂, NiO, MgO, SiO₂, SnO₂, SrTiO₃, TiO₂, Y₂O₃, ZnO, ZrO₂, Pb(Zrₓ,Ti₁₋ₓ)O₃ (PZT, 0<x<1), Pb₁₋ₓLaₓZr_{1-y}Ti_{y}O₃ (PLZT, 0<x<1, 0<y<1), (1-x)Pb(Mg_{1/3}Nb_{2/3})O₃₋ₓPbTiO₃ (PMN-PT, 0<x<1), and hafnia (HfO₂).

8. The electrode stack for a lithium secondary battery of claim 1, wherein the insulation layer further comprises at least one polymer selected from polybutadiene, polyurethane, polyimide, polyvinyl acetate, polyester, polyphenylene sulfide, polypropylene, a styrene-butadiene-based copolymer, a (meth)acrylate copolymer, polyacrylonitrile, polyvinyl chloride, polyfluoro, polyvinyl alcohol, and polycyanoacrylate.

9. The electrode stack for a lithium secondary battery of claim 8, wherein an amount of the polymer is in a range of 50 wt% to 90 wt% based on a total weight of the insulation layer.

10. The electrode stack for a lithium secondary battery of claim 1, wherein the insulation layer has an average thickness of 3 um to 7 µm.

11. The electrode stack for a lithium secondary battery of claim 1, wherein the inorganic compound is a lithium iron phosphate-based oxide.

12. An electrode assembly for a lithium secondary battery, the electrode assembly comprising the electrode stack for a lithium secondary battery of claim 1.

13. A lithium secondary battery comprising the electrode assembly for a lithium secondary battery of claim 12.
